# EUROPÄISCHE PATENTSCHRIFT

(11) **EP 2 599 718 B1**
(45) Veröffentlichungstag und Bekanntmachung des Hinweises auf die Patenterteilung: **19.07.2017**
(21) Anmeldenummer: 12007495.0
(22) Anmeldetag: 02.11.2012
(51) Int. Cl.: B64C 39/02

(54) **FERNSTEUERBARE FLUGPLATTFORM**
REMOTE CONTROLLABLE FLIGHT PLATFORM
PLATEFORME D'ENVOL TÉLÉCOMMANDABLE

(30) Priorität: 29.11.2011 DE 102011119590
(43) Veröffentlichungstag der Anmeldung: 05.06.2013
(73) Patentinhaber: Aibotix GmbH, 34131 Kassel (DE)
(72) Erfinder: Werner, Carsten, 34132 Kassel (DE); Chalas, Uwe, 34470 Breuna (DE)
(74) Vertreter: Knefel, Cordula

(56) Entgegenhaltungen:
- WO-A1-2011/058255
- DE-A1-102009 033 821
- US-A1- 2009 283 629

## Beschreibung

Die Erfindung betrifft eine fernsteuerbare, scheibenförmige Flugplattform, umfassend ein Plattformgehäuse, wobei das Plattformgehäuse mehrere motorisch betriebene, horizontal ausgerichtete Rotoren aufweist, gemäß dem Oberbegriff des Anspruchs 1.

Fernsteuerbare Fluggeräte oder Flugplattformen sind beispielsweise als Spielzeuge bekannt, wobei die Fluggeräte als Schwebeplattformen in Scheibenform mehrere horizontal angeordnete Rotoren aufweisen, die zum einen dem Aufstieg und zum anderen dem Vortrieb des Fluggerätes dienen.

Parallel dazu sind allerdings auch Fluggeräte bekannt, die als Flugplattformen ausgebildet sind, die industriellen oder auch militärischen Zwecken dienen. Solche Flugplattformen, insbesondere zu industriellen Zwecken, weisen einen Durchmesser zwischen einem halben und einem Meter und mehr auf. Eingesetzt werden solche fernsteuerbaren Flugplattformen, auch Flugroboter genannt, bei Bestückung mit einer Kamera auf der Unterseite, zur Informationsgewinnung des Verhaltens von Menschenansammlungen, zur Überprüfung von Bauwerken, z. B. Häusern oder auch Brücken, oder auch zur Überprüfung von Industrieanlagen, und hier insbesondere Chemieanlagen. Solche Fluggeräte in Form von Flugplattformen besitzen unter anderem Acceleratoren und Gyroskope, um solche Flugplattformen zu steuern. Durch die Rotoren werden Schwingungen erzeugt, die naturgemäß auf das Gehäuse der Flugplattform übertragen werden. Solche Schwingungen können zu Störungen der Acceleratoren und Gyroskope führen, was in einer ungenauen Lageerkennung der Flugplattform resultiert, was wiederum die Flugeigenschaften negativ beeinflusst.

Es wurde bereits an anderer Stelle darauf hingewiesen, dass solche Flugplattformen auch eingesetzt werden, um Luftbilder oder-videos zu erstellen. Insbesondere in Bezug auf Videoaufnahmen sind Vibrationen an der Kamera ebenfalls von Nachteil, da verwackelte Aufnahmen unbrauchbar sein können.

In diesem Zusammenhang wird auf die US 2009/0283629 A1 verwiesen. Aus dieser Literaturstelle ist ein Flugroboter bekannt, der über ein Gehäuse verfügt, wobei das Gehäuse umfangsverteilt Aufnahmen für die Arme der Rotoren aufweist. Die Arme der Rotoren sind in den entsprechenden Aufnahmen des Gehäuses durch sogenannte Schnappverschlüsse befestigt. Zwischen dem Arm des Rotors und dem Gehäuse ist ein O-Ring vorgesehene. Die Rotoren gemäß diesem Stand der Technik sind freiliegend angeordnet, so dass im Falle einer Kollision mit einem Gegenstand die Flugplattform einen erheblichen Schaden nimmt. Des Weiteren ist aus der WO 2011/058255 A1 eine Schwingungsentkopplung zwischen Übergang von dem Gehäuse und einem Träger bei einer Drohne bekannt. Die am Gehäuse angeordneten Sensoren bleiben Schwingungseinflüssen ausgesetzt, was die Gefahr von Fehlfunktionen mit sich bringt mit der Folge, dass ein solches Fluggerät auch abstürzen kann.

Die der Erfindung zugrunde liegende Aufgabe besteht demzufolge darin, eine fernsteuerbare Flugplattform der eingangs genannten Art bereitzustellen, bei der sowohl beim Betrieb der Plattform die durch die Rotoren erzeugten Vibrationen keinen Einfluss auf die Flugeigenschaften der Flugplattform nehmen können, als auch die Nutzlast, beispielsweise eine Kamera im Wesentlichen keine Beeinflussung durch Vibrationen erfährt.

Zur Lösung der Aufgabe wird erfindungsgemäß bei einer fernsteuerbaren Flugplattform der Eingangs genannten Art vorgeschlagen, dass ein jeder Rotor durch einen Tragarm mit einer die Tragarme der Rotoren aufnehmenden Tragstruktur in Verbindung steht, wobei die Tragstruktur in einem Plattformgehäuse zentrisch angeordnet ist, wobei mindestens ein Transportgehäuse von den motorbetriebenen Rotoren schwingungsentkoppelt durch die Tragstruktur aufgenommen ist und wobei das Plattformgehäuse stirnseitig eine geschlossene Kontur bildet, und wobei die stirnseitig geschlossene Kontur stirnseitig Abstandssensoren aufweist.

Hierbei nimmt das Transportgehäuse Geräte auf, z. B. Geräte zur Fluglageerkennung, also beispielsweise Acceleratoren und Gyroskope. Andererseits dient dieses Transportgehäuse aber auch der Aufnahme der Nutzlast, also insbesondere z. B. einer Kamera, wodurch erreicht wird, dass eine solche Kamera während des Flugbetriebes auf Grund der schwingungstechnischen Entkoppelung vibrationsarme bzw. vibrationsfreie Aufnahmen zur Verfügung stellen kann.

Vorteilhafte Merkmale und Ausgestaltungen zu der Erfindung ergeben sich aus den Unteransprüchen.

So ist nach einem besonderen Merkmal der Erfindung vorgesehen, dass die Tragstruktur ein schwingungsdämpfendes Material aufweist. Hieraus wird deutlich, dass die Schwingungen, die vom motorisch betriebenen Rotor über den Tragarm auf die Tragstruktur übertragen werden, von der Tragstruktur absorbiert werden, mithin das Transportgehäuse schwingungsfrei oder nahezu schwingungsfrei ist. Hierzu ist im Einzelnen die Tragstruktur aus einem Hartschaum, also einem schwingungsabsorbierenden Material ausgebildet. Die Verwendung eines solchen Hartschaumes zur Herstellung der Tragstruktur hat einerseits den Vorteil, dass die Tragstruktur äußerst steif ist, aber dennoch auf Grund der Eigenschaften des Schaumes andererseits in der Lage ist, die von den Tragarmen eingeleiteten Schwingungen zu absorbieren oder weitgehend zu absorbieren. Als besonders vorteilhaft hat sich herausgestellt, wenn die Verbindung zwischen der Tragstruktur einerseits und dem jeweiligen Tragarm andererseits durch ein schwingungsdämpfendes Material erfolgt. Als schwingungsdämpfendes Material kann beispielsweise ein Elastomer eingesetzt werden, beispielsweise Silikon, wodurch erreicht wird, dass der Anteil an Schwingungen, die tatsächlich auf die Tragstruktur übertragen werden, vermindert wird.

Dem gleichen Ziel dient auch, den Motor des jeweiligen Rotors im Wesentlichen schwingungsentkoppelt durch den Tragarm aufzunehmen. Der Tragarm weist endseitig einen Tragarmkopf auf, wobei der Kopf im Wesentlichen zylindrisch ausgebildet ist. Um die Schwingungsübertragung des Rotors über den Motor auf den Tragarm zu minimieren, ist der Motor des Rotors im Tragarmkopf beispielsweise durch ein schwingungsdämpfendes Elastomerlager aufgenommen.

Nach einem weiteren Merkmal der Erfindung ist die Tragstruktur im Wesentlichen schwingungsentkoppelt mit dem Plattformgehäuse verbunden. Das Plattformgehäuse selbst weist stirnseitig Sensoren auf, z. B. zur Abstandserkennung. Auch die Funktion solcher Sensoren kann durch Schwingungen beeinträchtigt werden. Es wurde bereits darauf hingewiesen, dass die Tragstruktur selbst in der Lage ist, auf Grund der Verwendung beispielsweise von einem Schaummaterial einen erheblichen Teil der Schwingungen zu absorbieren. Eine zusätzliche Absorption von Schwingungen wird dadurch erreicht, dass das Plattformgehäuse durch z. B. Elastomerkörper mit der Tragstruktur schwingungsdämpfend verbunden ist.

Die Tragstruktur selbst ist nach einem weiteren Merkmal der Erfindung kranzartig ausgebildet, wobei die Tragarme zur Aufnahme der Rotoren mit gleichem Abstand umfangsverteilt an der kranzartig ausgebildeten Tragstruktur angeordnet sind. Das heißt, die Tragarme stehen nicht unmittelbar miteinander in Verbindung, sondern mittelbar über die Tragstruktur. Hier wird durch die Entkopplung der Schwingungen der Tragarme der Entstehung von Resonanzen vorgebeugt.

Nach einem weiteren Merkmal der Erfindung ist das Transportgehäuse zur Aufnahme durch die Tragstruktur napf- oder topfartig ausgebildet. In diesem napf- oder topfartigen Transportgehäuse, das zur Gewichtsersparnis beispielsweise auch skelettiert ausgebildet sein kann, befinden sich, wie bereits ausgeführt, einerseits die elektrischen und elektronischen Geräte z. B. zur Fluglageerkennung, wie beispielsweise Acceleratoren und Gyroskope, andererseits befindet sich an diesem topf- oder napfartigen Transportgehäuse allerdings auch die Traglast, beispielsweise eine Kamera. Der Vorteil der Verwendung eines Transportgehäuses in Form eines Topfes oder Napfes liegt darüber hinaus darin, dass hierdurch die Steifigkeit der Tragstruktur selbst erhöht wird. Dies hat zur Folge, dass das Plattformgehäuse im Wesentlichen keine Eigenstabilität aufweisen muss, was zur weiteren Folge hat, dass das Plattformgehäuse vom Gewicht her leicht ausgestaltet sein kann.

Das napf- oder topfartige Transportgehäuse ist vorteilhaft an der Unterseite der Flugplattform angeordnet, was Vorteile in Bezug auf den Schwerpunkt der Flugplattform als solche hat. Auf der Oberseite der Tragstruktur befindet sich ein flacher Deckel durch den zusammen mit einem Boden eine Gehäusekammer gebildet wird. Der Boden kann hierbei Bestandteil des Plattformgehäuses, insbesondere der Oberschale des zweischalig ausgebildeten Plattformgehäuses sein. Diese Gehäusekammer dient beispielsweise der Aufnahme des Akkus. Auch der Deckel sorgt in gewissem Umfang für eine Aussteifung der Tragstruktur ähnlich dem Transportgehäuse, das gegenüberliegend an der Unterseite der Tragstruktur angeordnet ist. An der Tragstruktur oder auch am Transportgehäuse befinden sich mindestens drei Beine, auf denen die Flugplattform auf dem Boden aufsteht.

Das Plattformgehäuse selbst ist scheibenförmig ausgebildet, und entsprechend der Anzahl der Rotoren mit Ausnehmungen für die Rotoren versehen. Das Plattformgehäuse zeigt darüber hinaus stirnseitig eine geschlossene Kontur. Vorteilhaft an einem stirnseitig geschlossenen Plattformgehäuse ist, dass hierdurch die Rotoren geschützt sind. Das heißt, wenn eine solche Plattform während des Fluges an Gegenstände anstößt, dann bedingt dies nicht automatisch eine Beschädigung der Rotoren. Darüber hinaus ist auch die Gefahr der Verletzung von Personen bei Kontakt mit einer solchen fliegenden Plattform durch die schnell laufenden Rotoren vermindert. An der Stirnseite der geschlossenen Kontur der Plattform sind über den Umfang verteilt Sensoren zur Bestimmung des Abstands der Flugplattform zu anderen Gegenständen angeordnet.

Die Ausnehmungen für die Rotoren sind im Radbereich des Plattformgehäuses angeordnet. Die stirnseitig geschlossene Kontur des Plattformgehäuses folgt wellenförmig der Anordnung der Ausnehmungen für die Rotoren in dem Plattformgehäuse. In Verbindung mit den Ausnehmungen für die einzelnen Rotoren ergibt sich somit ein skelettiertes und damit ein gewichtssparendes Plattformgehäuse.

Das Plattformgehäuse setzt sich, wie ausgeführt, aus einer Ober- und einer Unterschale zusammen, die beide zusammen eine in sich stabile Konstruktion bilden. Dies deshalb, weil Ober- und Unterschale ein Gehäuse bilden.

Anhand der Zeichnungen wird die Erfindung beispielhaft näher erläutert.

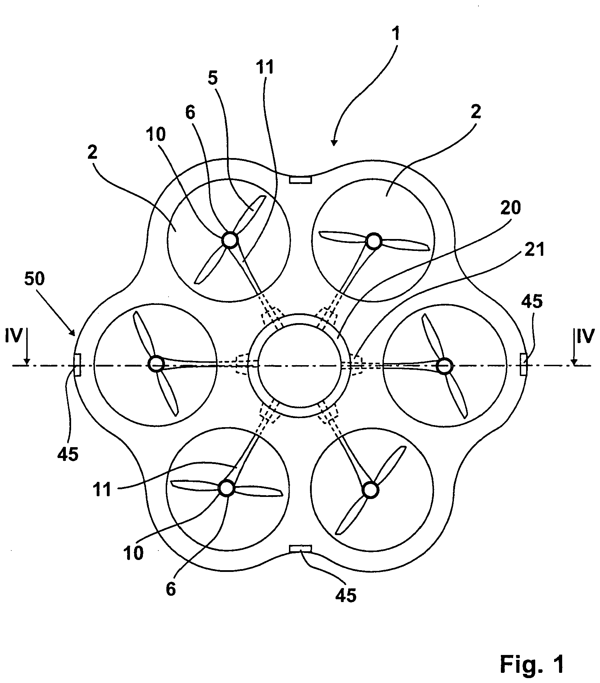

- Fig. 1: zeigt die fernsteuerbare Flugplattform in einer Ansicht von oben;
- Fig. 2: zeigt eine Seitenansicht gemäß Fig. 1;
- Fig. 3: zeigt die Tragstruktur einschließlich der daran sternförmig angeordneten Tragarme in einer Ansicht von oben, wenn die Tragstruktur eingebaut ist;
- Fig. 4: zeigt einen Schnitt gemäß der Linie IV-IV aus Fig. 1;
- Fig. 5: zeigt einen Schnitt gemäß der Linie V-V aus Fig. 4.

Die insgesamt mit 1 bezeichnete Flugplattform weist insgesamt sechs kreisrunde Ausnehmungen 2 für die mit 5 bezeichneten Rotoren auf. Ein jeder Rotor umfasst einen Motor 6, der durch den Tragarmkopf 10 des Tragarmes 11 schwingungsdämpfend z. B. durch Elastomerkörper aufgenommen ist. Hierbei zeigt der Tragarmkopf 10 einen Boden 12, auf dem ein Elastomerkissen 10a zur Aufnahme des Motors 6 angeordnet ist. Ein jeder Tragarm 11 wird durch die insgesamt mit 20 bezeichnete Tragstruktur gehalten. Die Tragstruktur 20 stellt sich als kranz- oder ringförmiges Gebilde dar, wobei die Tragarmstruktur 20 im Bereich des Übergangs zu den Tragarmen 11 schalenförmige Ausnehmungen 13 und flanschförmige Ansätze 21 zur Vergrößerung der Auflagefläche für die Tragarme zeigt. Im Bereich der Ansätze 21 sind die Tragarme 11 durch die Tragstruktur 20 aufgenommen.

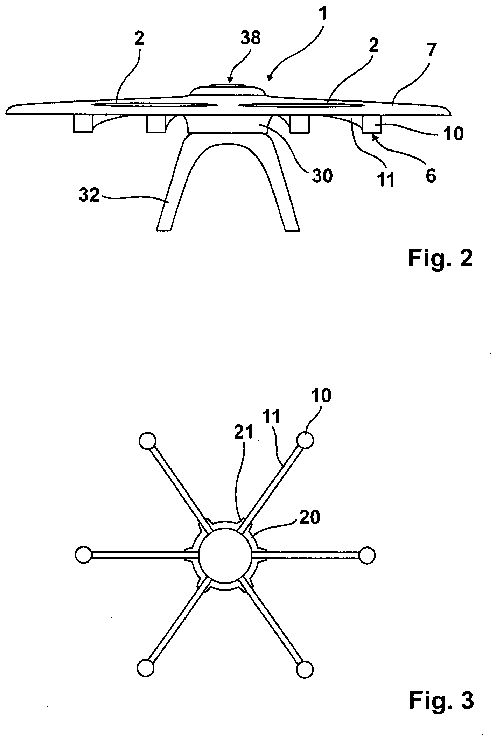

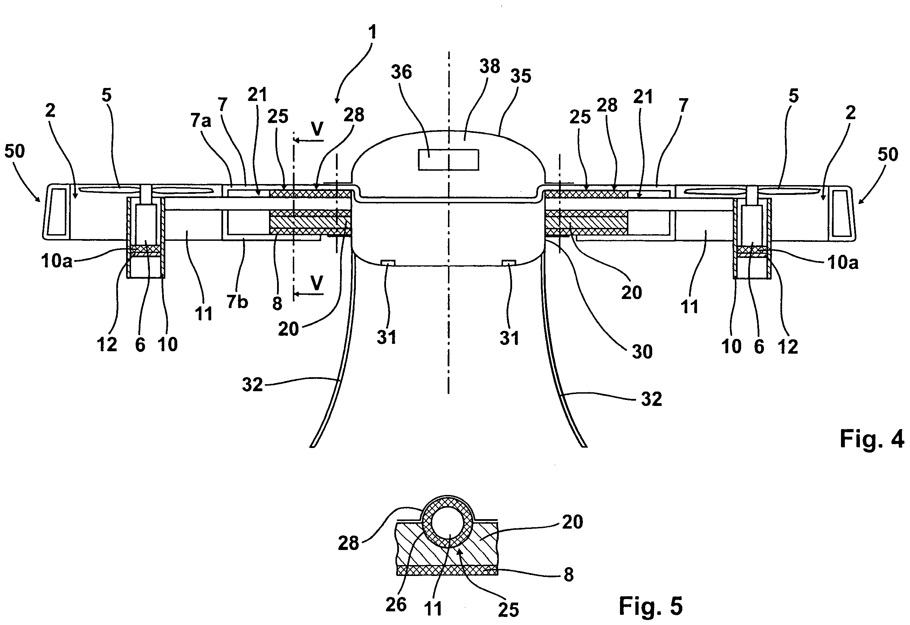

Die Anordnung der Tragarme 11 an der Tragstruktur 20 ergibt sich im Einzelnen in Anschauung der Figuren 3 bis 5. So zeigt Fig. 3, dass die Tragstruktur 20 zur Aufnahme der Tragarme 11 im Bereich der flanschförmigen Ansätze 21 eine schalenförmige Ausnehmung 25 besitzt. Zwischen der Oberseite der schalenförmigen Ausnehmung, und dem Tragarm 11 befindet sich ein Elastomermaterial 26, z. B. in Form eines Kissens, was einerseits mit der schalenförmigen Ausnehmung in der Tragstruktur 20 und andererseits mit dem Tragarm verklebt sein kann.

Denkbar ist allerdings auch, beispielsweise einen Silikonkleber zu verwenden, um den Tragarm 11 unmittelbar in der schalenförmigen Ausnehmung 25 der Tragstruktur 20 zu verkleben. Die Verwendung eines solchen Elastomerkissens oder auch einer Verklebung, beispielsweise mit einem Silikonkleber, sorgt für eine Verminderung der Übertragung von Schwingungen oder Vibrationen von dem Tragarm in die Tragstruktur. Zur sicheren Befestigung des Tragarmes 11 in der schalenförmigen Ausnehmung 25 der Tragstruktur, kann auf der Oberseite eine Lasche 28 vorgesehen sein, die an der Oberseite des Tragarmes über dem Elastomerkissen 26 anliegt und an der Tragstruktur angeordnet ist. Die Anordnung der Tragstruktur 20 an dem Plattformgehäuse kann ebenfalls über Elastomerkissen 8 erfolgen.

An der Tragstruktur 20 befindet sich das napf- oder topfartige Transportgehäuse 30. In dem Transportgehäuse 30 sind beispielsweise Gyroskope oder Acceleratoren (nicht dargestellt) gelagert, die für die Steuerung der Flugplattform im Flugbetrieb erforderlich sind. Darüber hinaus zeigt das Transportgehäuse Mittel in Form von Schraubbuchsen 31 beispielsweise zur Anbringung einer Kamera (nicht dargestellt). Auf der Oberseite der Flugplattform befindet sich ein Deckel 35, durch den in Verbindung mit einem Boden, der durch eine Vertiefung im Plattformgehäuse bereitgestellt sein kann, eine Gehäusekammer 38 gebildet wird, die beispielsweise der Aufnahme eines Akkus 36 dient. Über den Akku 36 werden die einzelnen Elektromotoren 6 für die Rotoren 5 mit Strom versorgt. Es ist allerdings auch denkbar, den Akku unmittelbar am Deckel 35 anzuordnen.

Die Flugplattform 1 umfasst darüber hinaus, wie bereits an anderer Stelle erläutert, das Plattformgehäuse 7. Das Plattformgehäuse umfasst eine Ober- und eine Unterschale 7a, 7b, die miteinander verbunden, insbesondere verklebt sind. Hierdurch erhält das Plattformgehäuse eine Eigenstabilität, die schlussendlich noch durch die Tragstruktur verstärkt wird. Das Plattformgehäuse 7 ist mit der Tragstruktur verbunden, beispielsweise verklebt. Erkennbar ist das scheibenförmige Plattformgehäuse 7 stirnseitig (Pfeil 50) allseits geschlossen. In Verbindung mit den Ausnehmungen 2 für die Rotoren 5 und dem stirnseitigen, bogenförmigen Verlauf des Plattformgehäuses um die Ausnehmungen 2 ergibt sich in Bezug auf das Plattformgehäuse eine skelettierte Ausbildung dieses Plattformgehäuses. Das heißt, dass aus Gewichtsersparnisgründen nur soviel Material an Plattformgehäuse zwischen den einzelnen Ausnehmungen verbleibt, wie einerseits für die Stabilität des Plattformgehäuses in Verbindung mit der Tragstruktur 20, und andererseits für die Bildung der stirnseitig geschlossenen Kontur erforderlich ist. Eine solche geschlossene Kontur hat mehrere Vorteile; zum Einen ist hier zu nennen, dass die Rotoren bei versehentlichem Anstoßen an Gegenstände während des Flugbetriebs geschützt sind, und das darüber hinaus auch Menschen vor den Rotoren geschützt sind, wenn diese bei Betrieb des Fluggerätes zufällig in Kontakt mit dem Fluggerät geraten sollten. Dies insbesondere vor dem Hintergrund, dass die Rotoren eine hohe Rotationsgeschwindigkeit aufweisen.

In diesem Zusammenhang ist darauf hinzuweisen, das die Stabilität nicht nur durch die Tragstruktur 20 bereitgestellt wird, sondern darüber hinaus auch durch das an der Tragstruktur angeordnete napf- oder topfartige Transportgehäuse 30. Denn dieses napf- oder topfartige Transportgehäuse 30 sorgt für eine Erhöhung der Verwindungssteifigkeit der kranz- oder ringförmigen Tragstruktur 20. In gleicher Weise fungiert auch der Deckel 35, der auf der Oberseite der Tragstruktur 20 angeordnet ist.

Am Transportgehäuse 30 befinden sich drei Beine 32, mit denen die Flugplattform 30 auf dem Boden aufsteht.

An der Stirnseite des Plattformgehäuses sind Sensoren 45 angeordnet, die zur Ermittlung des seitlichen Abstandes der Flugplattform zu Objekten beim Flugbetrieb dienen.

### Bezugszeichenliste

- 1: Flugplattform
- 2: kreisrunde Ausnehmungen
- 5: Rotoren
- 6: Elektromotor
- 7: Plattformgehäuse
- 7a: Oberschale des Plattformgehäuses
- 7b: Unterschale des Plattformgehäuses
- 8: Elastomerkissen zwischen Tragstruktur und Plattformgehäuse
- 10: Tragarmkopf
- 10a: Elastomerkissen im Tragarmkopf
- 11: Tragarm
- 12: Boden im Tragarmkopf
- 20: Tragstruktur
- 21: flanschförmige Ansätze
- 25: schalenförmige Ausnehmung
- 26: Elastomermaterial
- 28: Lasche
- 30: Transportgehäuse
- 31: Schraubbuchsen
- 32: Bein
- 35: Deckel
- 36: Akku
- 38: Gehäusekammer
- 45: Sensoren
- 50: Pfeil

## Patentansprüche

1. Fernsteuerbare, scheibenförmige Flugplattform (1), umfassend ein Plattformgehäuse (7), wobei das Plattformgehäuse (7) mehrere motorisch betriebene, horizontal ausgerichtete Rotoren (5) aufweist, wobei jeder Rotor (5) durch einen Tragarm (11) mit einer die Tragarme (11) der Rotoren (5) aufnehmenden Tragstruktur (20) in Verbindung steht, wobei die Tragstruktur (20) in dem Plattformgehäuse (7) zentrisch angeordnet ist, wobei mindestens ein Transportgehäuse (30) von den motorbetriebenen Rotoren schwingungsentkoppelt durch die Tragstruktur aufgenommen ist, wobei das Plattformgehäuse (7) stirnseitig eine geschlossene Kontur bildet, **dadurch gekennzeichnet, dass** die stirnseitig geschlossene Kontur stirnseitig Abstandssensoren (45) aufweist.

2. Fernsteuerbare, scheibenförmige Flugplattform nach Anspruch 1,
**dadurch gekennzeichnet,**
**dass** die Tragstruktur (20) ein schwingungsdämpfendes Material aufweist.

3. Fernsteuerbare, scheibenförmige Flugplattform nach Anspruch 2,
**dadurch gekennzeichnet,**
**dass** die Tragstruktur (20) im Wesentlichen aus einem Hartschaummaterial ausgebildet ist.

4. Fernsteuerbare, scheibenförmige Flugplattform nach einem der voranstehenden Ansprüche,
**dadurch gekennzeichnet,**
**dass** die Verbindung zwischen Tragstruktur (20) einerseits und dem jeweiligen Tragarm (11) andererseits ein schwingungsdämpfendes Material (26) aufweist.

5. Fernsteuerbare, scheibenförmige Flugplattform nach einem der voranstehenden Ansprüche,
**dadurch gekennzeichnet,**
**dass** der Motor (6) des Rotors (5) im Wesentlichen schwingungsentkoppelt durch den Tragarm (11) aufgenommen ist.

6. Fernsteuerbare, scheibenförmige Flugplattform nach einem der voranstehenden Ansprüche,
**dadurch gekennzeichnet,**
**dass** die Tragstruktur (20) im Wesentlichen schwingungsentkoppelt durch das Plattformgehäuse (7) aufgenommen ist.

7. Fernsteuerbare, scheibenförmige Flugplattform nach einem der voranstehenden Ansprüche,
**dadurch gekennzeichnet,**
**dass** die Tragstruktur (20) kranzartig ausgebildet ist, wobei die Tragarme (11) zur Aufnahme der Rotoren (5) in gleichem Abstand umfangsverteilt an der kranzartig ausgebildeten Tragstruktur (20) angeordnet sind.

8. Fernsteuerbare, scheibenförmige Flugplattform nach einem der voranstehenden Ansprüche,
**dadurch gekennzeichnet,**
**dass** das Transportgehäuse (30) zur Aufnahme durch die Tragstrukturen (20) napf- oder topfartig ausgebildet ist.

9. Fernsteuerbare, scheibenförmige Flugplattform nach Anspruch 8,
**dadurch gekennzeichnet,**
**dass** das napf- oder topfartige Transportgehäuse (30) skelettiert ausgebildet ist.

10. Fernsteuerbare, scheibenförmige Flugplattform nach 8 oder 9,
**dadurch gekennzeichnet,**
**dass** das napf- oder topfartige Transportgehäuse (30) elektrische oder elektronische Geräte zum Betrieb der Flugplattform (1) aufnimmt.

11. Fernsteuerbare, scheibenförmige Flugplattform nach 8 oder 10,
**dadurch gekennzeichnet,**
**dass** das napf- oder topfartige Transportgehäuse (30) Mittel (31) zur Anbringung einer Nutzlast aufweist.

12. Fernsteuerbare, scheibenförmige Flugplattform nach einem der Ansprüche 8 bis 11,
**dadurch gekennzeichnet,**
**dass** das napf- oder topfartige Transportgehäuse (30) auf der Unterseite der Flugplattform (1) angeordnet ist.

13. Fernsteuerbare, scheibenförmige Flugplattform nach einem der voranstehenden Ansprüche,
**dadurch gekennzeichnet,**
**dass** die Tragstruktur (20) auf der Oberseite eine Gehäusekammer (38) aufweist.

14. Fernsteuerbare, scheibenförmige Flugplattform nach einem der voranstehenden Ansprüche,
**dadurch gekennzeichnet,**
**dass** das Plattformgehäuse (7) scheibenförmig ausgebildet ist und entsprechend der Anzahl der Rotoren (5) Ausnehmungen (2) für die Rotoren (5) aufweist.

## Claims

1. A remotely controllable, disc-shaped airborne platform (1), comprising a platform housing (7), wherein the platform housing (7) has a plurality of motor-driven, horizontally oriented rotors (5), wherein each rotor (5) is connected by a supporting arm (11) to a supporting structure (20) which receives the supporting arms (11) of the rotors (5), wherein the supporting structure (20) is arranged centrally in the platform housing (7), wherein at least one transport housing (30) is received by the supporting structure in vibration-isolated manner from the motor-driven rotors,
wherein the platform housing (7) forms a closed contour on the end face, **characterised in that** the contour which is closed on the end face has distance sensors (45) on the end face.

2. A remotely controllable, disc-shaped airborne platform according to Claim 1,
**characterised in that**
the supporting structure (20) comprises a vibration-damping material.

3. A remotely controllable, disc-shaped airborne platform according to Claim 2,
**characterised in that**
the supporting structure (20) is formed substantially of a rigid foam material.

4. A remotely controllable, disc-shaped airborne platform according to one of the preceding claims,
**characterised in that**
the connection between the supporting structure (20) on one hand and the respective supporting arm (11) on the other hand comprises a vibration-damping material (26).

5. A remotely controllable, disc-shaped airborne platform according to one of the preceding claims,
**characterised in that**
the motor (6) of the rotor (5) is received by the supporting arm (11) substantially in vibration-isolated manner.

6. A remotely controllable, disc-shaped airborne platform according to one of the preceding claims,
**characterised in that**
the supporting structure (20) is received by the platform housing (7) substantially in vibration-isolated manner.

7. A remotely controllable, disc-shaped airborne platform according to one of the preceding claims,
**characterised in that**
the supporting structure (20) is crown-shaped, the supporting arms (11) for receiving the rotors (5) being arranged distributed around the periphery of the crown-shaped supporting structure (20) at equal distances.

8. A remotely controllable, disc-shaped airborne platform according to one of the preceding claims,
**characterised in that**
the transport housing (30) is bowl-shaped or pot-shaped for being received by the supporting structures (20).

9. A remotely controllable, disc-shaped airborne platform according to Claim 8,
**characterised in that**
the bowl-shaped or pot-shaped transport housing (30) is formed in skeletonised manner.

10. A remotely controllable, disc-shaped airborne platform according to 8 or 9 [sic],
**characterised in that**
the bowl-shaped or pot-shaped transport housing (30) receives electric or electronic devices for operating the airborne platform (1).

11. A remotely controllable, disc-shaped airborne platform according to 8 or 10 [sic],
**characterised in that**
the bowl-shaped or pot-shaped transport housing (30) has means (31) for attaching a payload.

12. A remotely controllable, disc-shaped airborne platform according to one of Claims 8 to 11,
**characterised in that**
the bowl-shaped or pot-shaped transport housing (30) is arranged on the underside of the airborne platform (1).

13. A remotely controllable, disc-shaped airborne platform according to one of the preceding claims,
**characterised in that**
the supporting structure (20) has a housing chamber (38) on the upper side.

14. A remotely controllable, disc-shaped airborne platform according to one of the preceding claims,
**characterised in that**
the platform housing (7) is disc-shaped and has recesses (2) for the rotors (5) which correspond to the number of rotors (5).

## Revendications

1. Plateforme d'envol (1) télécommandable en forme de disque, comprenant un corps (7) de plateforme, le corps (7) de plateforme comportant plusieurs rotors (5) motorisés et orientés horizontalement, chaque rotor (5) étant relié par un bras de support (11) à une structure de support (20) recevant les bras de support (11) des rotors (5), la structure de support (20) étant agencée de manière centrale dans le corps (7) de plateforme, au moins un corps de transport (30) étant reçu par la structure de support de manière à ne pas vibrer avec les rotors motorisés,
le corps de plateforme (7) formant frontalement un contour fermé, **caractérisée en ce que** le contour fermé comprend frontalement des capteurs de distance (45).

2. Plateforme d'envol télécommandable en forme de disque selon la revendication 1,
**caractérisée en ce que**
la structure de support (20) comporte un matériau amortissant les vibrations.

3. Plateforme d'envol télécommandable en forme de disque selon la revendication 2,
**caractérisée en ce que**
la structure de support (20) est essentiellement constitué d'un matériau en mousse dure.

4. Plateforme d'envol télécommandable en forme de disque selon l'une quelconque des revendications précédentes,
**caractérisée en ce que**
la liaison entre la structure de support (20) d'une part et chaque bras de support (11) d'autre part comporte un matériau amortissant les vibrations (26).

5. Plateforme d'envol télécommandable en forme de disque selon l'une quelconque des revendications précédentes,
**caractérisée en ce que**
le moteur (6) du rotor (5) est reçu par le bras de support (11) sensiblement de manière à ne pas vibrer.

6. Plateforme d'envol télécommandable en forme de disque selon l'une quelconque des revendications précédentes,
**caractérisée en ce que**
la structure de support (20) est reçue par le corps (7) de plateforme sensiblement de manière à ne pas vibrer.

7. Plateforme d'envol télécommandable en forme de disque selon l'une quelconque des revendications précédentes,
**caractérisée en ce que**
la structure de support (20) est en forme de couronne, les bras de support (11) destinés à recevoir les rotors (5) étant répartis de manière équidistante à la périphérie de la structure de support (20) en forme de couronne.

8. Plateforme d'envol télécommandable en forme de disque selon l'une quelconque des revendications précédentes,
**caractérisée en ce que**
le corps de transport (30) destiné à recevoir les structures de support (20) est en forme de coupelle ou de pot.

9. Plateforme d'envol télécommandable en forme de disque selon la revendication 8,
**caractérisée en ce que**
le corps de transport (30) en forme de coupelle ou de pot est squeletté.

10. Plateforme d'envol télécommandable en forme de disque selon la revendication 8 ou 9,
**caractérisée en ce que**
le corps de transport (30) en forme de coupelle ou de pot reçoit des appareils électriques ou électroniques permettant le fonctionnement de la plateforme d'envol (1).

11. Plateforme d'envol télécommandable en forme de disque selon la revendication 8 ou 10,
**caractérisée en ce que**
le corps de transport (30) en forme de coupelle ou de pot comprend des moyens (31) permettant la fixation d'une charge utile.

12. Plateforme d'envol télécommandable en forme de disque selon l'une quelconque des revendications 8 à 11,
**caractérisée en ce que**
le corps de transport (30) en forme de coupelle ou de pot est agencé sur la face inférieure de la plateforme d'envol (1).

13. Plateforme d'envol télécommandable en forme de disque selon l'une quelconque des revendications précédentes,
**caractérisée en ce que**
la structure de support (20) comprend une chambre (38) de corps sur la face supérieure.

14. Plateforme d'envol télécommandable en forme de disque selon l'une quelconque des revendications précédentes,
**caractérisée en ce que**
le corps (7) de plateforme est en forme de disque et présente des évidements (2) pour les rotors (5) et correspondant au nombre de rotors (5).
